# EUROPEAN PATENT APPLICATION

(11) **EP 2 537 805 A1**
(43) Date of publication of application: **26.12.2012**
(21) Application number: 10779564.3
(22) Date of filing: 28.09.2010
(51) Int. Cl.: C01B 33/38, C09C 1/42, C01B 33/44

(54) **METHOD FOR OBTAINING LAMINAR PHYLLOSILICATE PARTICLES HAVING CONTROLLED SIZE AND PRODUCTS OBTAINED USING SAID METHOD**

(30) Priority: 16.02.2010 ES 201030215
(71) Applicant: Nanobiomatters Industries, S.l., 46980 Paterna, Valencia (ES)
(72) Inventor: LAGARON CABELLO, José María, E-46980 Paterna (Valencia) (ES); LAGARON CABELLO, Enrique, E-46980 Paterna (Valencia) (ES)
(74) Representative: Pons Ariño, Angel
(86) International application number: PCT/ES2010/070630
(87) International publication number: WO 2011/101508

(57) **Abstract**

The present invention relates to a layered phyllosilicate particle production process (e.g. kaolinite, montmorillonite, pyrophyllite, bentonite, smectite, hectorite, sepiolite, saponite, laponite, halloysite, vermiculite, mica, chlorite, illite type and mixtures) with or without surface modification, the larger size whereof (in D100) in the greater of their dimensions is between 0.05 and 15 microns, as well as to the phyllosilicate particles that can be produced by this process and to their use as additives in plastic or ceramic matrices to obtain materials with multi-sector applications.

## Description

The present invention relates to a layered phyllosilicate particle production process (e.g. kaolinite, montmorillonite, pyrophyllite, bentonite, smectite, hectorite, sepiolite, saponite, laponite, halloysite, vermiculite, mica, chlorite, illite type and mixtures) with or without surface modification, which largest particle size (in so-called D100) in the greatest of their dimensions is comprised between 0.05 and 15 microns, as well as to the phyllosilicate particles that can be obtained by this process and to their use as additives in plastic or ceramic matrices to obtain materials with multi-sector applications.

### STATE OF THE PRIOR ART

The use of layered clays is very widespread in multi-sector applications, they are typically used in industrial processes with particle sizes above three microns in so-called D50 (50% of the material has dimensions below that value).

The state of the art includes several examples of the use of phyllosilicates both dry process and wet process. Thus, patent applications CN101049940 and EP0000129 disclose processes for the enrichment of phyllosilicates making them purer and cleaner.

Patent applications GB Numbers 1318867, 1119305, 1252622 and US4118247 disclose cellulose paste production processes for manufacturing paper by the addition of an aqueous suspension of cellulose fibres of asbestos and phyllosilicates.

Patent application ES2242532 discloses a kaolinite nanoparticle production process with high iron content incorporated in its structure.

Patent applications GB1214532 and RU2125022 disclose processes for the clarification of suspensions by flocculation using phyllosilicates obtaining drinking or industrial waters.

Patent application HU63595 discloses a process wherein, by adding phyllosilicates, a delay is achieved in fertiliser sedimentation.

Patent applications GB722073 and CN1966553 disclose processes to improve natural or synthetic rubbers and other elastomers by the addition of phyllosilicates with particle size around 25mm.

Patent application CA1038295 discloses a process wherein a clay suspension is used as anti-dispersant for aerosol dust. Patent applications CA1305641, CA1307369 and US4836946, US4752409 disclose gel-liquid production processes using clays as thickening agent.

Also very widespread is the use of nanoparticles in the thickness of clays for pharmaceutical processes as reflected in patent applications CN 101002796, ES2242532.

In the field of plastics, one of the areas generating greatest interest is the development of composite materials, and more specifically nanocomposites based on the reinforcement of plastics with nanoclays. There are different techniques of nanocomposite preparation, both for the casting method (Ogata N, Jimenez G, Kawai H, Ogihara T; J Polym Sci Part B: Polym Phys 1997; 35:389-396), and by the melt mixing method (Sinha Ray S, Yamada K, Okamoto M, Ueda K. Nano Lett 2002; 2:1093-6, M.D. Sanchez-Garcia, E. Gimenez and J.M. Lagaron (J. App. Pol. Sci., DOI 10.1002/app) and by the *in situ* polymerisation method (Messersmith PB, Giannelis EP. Chem Mater 1993; 5:1064-6, Knani D, Gutman AL, Kohn DH. J Polym Sci. Part A: Polym Chem 1993; 31:1221-32). Furthermore, these novel nanocomposites and their processing techniques are disclosed in patents US Numbers 5747560; 4618528; 4528235; 4874728; 6391449; 6486253; 6376591 and 6156835; WO 95/14733; WO 93/04117 and more specifically in WO2007074184A1. In the last application, a new manufacturing route is disclosed of nanocomposites, which may or may not be biodegradable, with antimicrobial properties based on natural products and/or with capacity for controlled release of other active or bioactive substances. These nanocomposites based on phyllosilicates and/or synthetic layered double hydroxides are intercalations with different organic modifying agents, and also incorporated in thermoplastic and/ heat stable matrices, are capable of improving gas and vapour barrier properties. The aforementioned documents are some examples of patents and literature on polymer-clay nanocomposites prepared from modified clays. These documents disclose a nanocomposite material such as an exfoliated or intercalated plate, with tactoid structure of nanometric dimensions but only in the thickness, comprising intercalated clay dispersed in a polymer matrix, such as an oligomer, a polymer, or a mixture thereof.

### DESCRIPTION OF THE INVENTION

The present invention relates to a layered phyllosilicate particle production process (e.g. kaolinite, montmorillonite, pyrophyllite, bentonite, smectite, hectorite, sepiolite, saponite, laponite, halloysite, vermiculite, mica, chlorite, illite and mixtures) with or without surface modification which largest size (in so-called D100) can be controlled so that it is under 15 microns, to a product that can be obtained by said process and to the use of this product.

In a first aspect, the present invention relates to a phyllosilicate particle production process comprising at least the following stages:
a) Reduction in particle size of the starting phyllosilicate to a size of between 5 and 100 microns in D90 and
b) Controlled extraction of the particles with or without previous surface modification so that they have a size in any of their dimensions between 0.05 to 15 microns in D100.

Layered phyllosilicates are, for example and without being limiting in character, kaolinite, montmorillonite, pyrophyllite, bentonite, smectite, hectorite, sepiolite, saponite, laponite, halloysite, vermiculite, mica, chlorite, illite and mixtures. These layered phyllosilicates can be used, in the process of the present invention, with or without surface modification. The surface modification when applied allows better dispersion, compatibilization of these clays with plastic matrices and addition of new functionalities thereto (e.g. fire resistance, antimicrobial, antioxidant, oxygen absorber).

D90 and D100 mean that 90% or 100% of the particles in the distribution have equal or lower size than this value, respectively.

In a preferred embodiment, in stage (a) the decrease in particle size of the starting phyllosilicate is performed by dry process. Preferably, the dry process decrease is performed via the use of grinding techniques to a size between 5 and 30 microns in D90.

In another preferred embodiment, in the aforementioned process the decrease in stage (a) will be performed by wet process. Preferably, the decrease by wet process shall be performed by wash mills.

In a preferred embodiment, in the aforementioned process the extraction in stage (b) is performed by dry process. Preferably, the extraction by dry process is performed by means of the use of dynamic classifiers.

In another preferred embodiment, in the aforementioned process the extraction in stage (b) is performed by wet process. Preferably, the extraction by wet process is performed by means of the use of centrifuges.

The processes for producing nanoparticles comprise the following stages:
1.1 Dry process route: Decreasing particle size by mechanical action, for example, by means of grinding technologies to a particle size typically less than 30 microns in D90.
1.2 Wet process route: Decreasing particles size via solution, for example and without being limiting in character, by means of the use of wash mills. The operation of these apparatus is designed for the mixing and dilution of the raw material for the manufacturing of barbotine. The preparation of the aqueous suspension of the clay will have a suspension solids content of between 0.1% and 99.99% and more preferably between 10% and 70% by weight, and occasionally, organic and/or inorganic deflocculants configured to reduce viscosity can be used. The receptacle typically has several breakwaters to prevent the unit from diluting, rotating in unison with the stirring blade. The loading is performed through the upper part and the unloading through the lower part through a closure valve. The central stirrer, has in its upper part, a welded steel body housing two conical roller bearings which give the shaft rigidity to prevent vibrations or other movements that can be caused by the collision of the blade with the material.
2.1 Dry process route: Dry process fine and micronised materials separation process using dynamic classifiers. The operation of these apparatus consists of placing the product in the equipment dragged by an air current which maintains it in suspension. The rotation rate of the classifying cage will determine the maximum particle size that is allowed through. So that when the rising rate of the particle is greater than the cage rotation rate, the particle will be capable of passing through it. The fine particles will pass to a new selection stage, which is the cyclone. The cyclone is basically composed of a vertical cylinder with conical base, equipped with a tangential and normally rectangular inlet. Furthermore, we should highlight the fact that, by using centrifugal forces instead of gravitational forces, the sedimentation rate of the particles is largely increased making the separation more effective. The air current loaded with the particles in suspension is introduced tangentially in the cylindrical receptacle, the air exiting with very fine particles in suspension through a central opening located in the upper part. Therefore, it is observed that the flow model followed by the air within the cyclone is that of the double vortex. First the air with particles in suspension from the separator make a spiral in descending direction and through the outer area, to then rise through the inner area also describing a helix. The dust particles, due to their inertia, tend to move towards the periphery of the equipment moving away from the air inlet and being collected in a collector located in the conical base (reject). The air loaded with the finer particles in the order of 10 microns, which have not been knocked down in the cyclone pass to the sleeve filter. The sleeve filter consists of a series of bags in the form of sleeves, normally of synthetic or natural fibre placed in supports to give consistency and supported by a dividing plate which delimits the two plenums and all enclosed in a hermetic casing. The air with the particles in suspension enters a compartment called "dirty plenum" undergoing an initial expansion followed by a sudden change in their direction, which means that the thicker particles directly fall into the hopper. The air with the rest of particles then passes through sleeves, then pass through the sleeves, which is where the actual filtration takes place since the particles remain on the outer surface thereof and the air, now clean, penetrates through then. Then this passes to the upper area of the filter called clean plenum and, through a series of ducts, it exits to the outside through a chimney. The sleeve filter also contains a series of panels to redirect the air, sleeve cleaning devices and a hopper to collect the particles captured. In this process, the particle size obtained is approximately 10 microns in D90.
2.2) Wet process: The wet process separation process can start from any of steps 1.1, 1.2 or be consecutive to step 2.1) and it consists of a process to separate ultrafine materials using the wet process using centrifuges, decanter, filtration in vibroscreen or filter-press. A preferred process for the present invention is the use of centrifuges. The operation of this process consists of making the product enter the equipment and submitting it to the action of the centrifugal force due to the effect of fast rotation of the drum. The product is formed by a suspension of clay in a polar solvent, typically without being limiting in character, water or alcohols in a clay concentration less than 98% by weight, more preferably less than 75% and even more preferably less than 25%. The suspension may alternatively have dispersant or deflocculating substances such as, and without being limiting in character, sodium or barium carbonate, sodium silicate, phosphorous compounds (sodium tripolyphosphate, sodium hexamethaphosphate) and the sodium polyacrylates. The product is accelerated through a series of ribs and uniformly distributed through the rising channels of the set of plates. The separation is carried out in the set of plates by the effect of centrifugal force. The set of plates consists of a great quantity of superimposed trunk-conical plates. The interstitial straits formed by the adjacent plates divide the liquid in fine layers. This reduces the radial path of sedimentation that the solids must travel. The minute solid particles are thrown against the lower surface of the plates and slide towards the periphery, being discharged through nozzles distributed uniformly along the periphery of the drum to the exterior. The liquid, with less specific weight, is transported towards the centre of the drum and rises through an inner tube dragging the finer particles in suspension exiting towards the exterior under pressure. The particle size reached by this process is less than one micron in D100.
3) Alternatively, the nanoparticulate product of step 2.1 and step 2.2 can be modified with surface modifiers and/or with active or bioactive substances and later either left in wet process retaining the size or dried by a dry process (via atomization, lyophilization or another), that leads to a solid that retains the particle size of the starting product. The drying process of materials with controlled size preferred by the invention is the use of atomization dryers; the atomization process is a drying process, whereby a pulverized suspension in fine drops comes into contact with hot air producing a solid with low water content. The barbotine from a tank with solid content, and without being limited in character, of 50% and a suitable viscosity is pumped to the drying chamber using an atomization system. The finely nebulized barbotine is dried placing it in contact with a hot gas current. These gases are obtained by heating air from the outside by the use of a gas burner and producing a hot air current in the drying chamber that causes drying of the drops. The gas current used to dry the barbotine and obtain atomized dust is transported outside the drying chamber (containing a great quantity of humidity and dust in suspension) towards the cyclone and then to the sleeve filter, to finally evacuate it towards the outside using a chimney.

The modification process mentioned comprises the processes cited below:
3.1) Pre-treatment of the layered structures in one or several steps, by the use of expansive-type precursors as shown in Table 1.

**TABLE 1**

| **MODIFIER** | **d_{MODIFIER} (nm)** | **MODIFIER** | **d_{MODIFIER} (nm)** |
|---|---|---|---|
| *Unmodified kaolinite* | 0.72 | *Unmodified montmorillonite* | 0.98 |
| *Dimethyl sulfoxide (DMSO)* | 1.11 | *Polyethylene oxide* | 1.12 |
| *Silver nitrate* | *0.74* | *Silver nitrate* | *0.99* |
| *Silver acetate* | *0.74* | *Silver acetate* | *0.99* |
| *Nickel chloride* | *0.75* | *Nickel chloride* | *0.99* |
| *Cobalt chloride* | *0.76* | *Cobalt chloride* | *0.99* |
| *Copper nitrate* | *0.76* | *Copper nitrate* | *1.00* |
| Ammonium-iron sulfate | *0.74* | Ammonium-iron sulfate | *1.00* |
| *N-methyl formamide (NMF)* | 1.02 | *Cellulose acetobutyrate* | 1.13 |
| *Hydrated hydrazine* | 1.03 | *Calcium butyrate* | 0.92 |
| *Water* | 0.78 | *Sucrose* | 1.08 |
| | | *Acetoisobutyrate* | |
| *Alcohols* | 1.10 | *Manganese butyrate* | 0.95 |
| *Anhydrous hydrazine* | 0.96 | *Carboximethyl starch* | >3 |
| *Acetamide* | 1.09 | *Starch* | 1.21 |
| *DMSO+Methanol(MeOH)* | 1.12 | *Hydroxyethyl starch* | 1.15 |
| *Hexanoic acid* | 1.23 | *Hydroxypropyl starch* | 1.14 |
| *Acrylamides* | 1.44 | *Adonitol* | 1.04 |
| *Glucose* | 1.25 | *Sorbitol* | 1.19 |
| *Archylamide* | 1.14 | *Dibenzylidene sorbitol* | 1.16 |
| *Salicylic acid* | 1.07 | *Ethylene glycol* | 0.95 |
| *Manganese acetate* | 1.41 | *Polypropylene glycol* | 1.01 |
| *Caprolactam* | 1.18 | *Propylene glycol* | 1.01 |
| *Vinyl acetate* | 1.21 | *Glycolic acid* | 1.06 |
| *Potassium acetate* | 1.39 | *Triethylene glycol* | 1.08 |
| *Tannic acid* | 1.09 | *Tetraethylene glycol* | 1.06 |
| *Maleic acid* | 1.20 | *Glycerol* | 1.02 |
| *Maleic anhydride* | 1.20 | *1,2-Propaneodiol* | 1.09 |
| *Lactic acid* | 1.08 | *1,3-Propaneodiol* | 0.98 |
| *Adipic acid* | 1.03 | *Polyethylene glycol M_{w}=1000* | 1.11 |
| *Acetic acid* | 1.10 | *Polyethylene glycol M_{w}=3400* | 1.12 |
| *Acetaldehyde* | 0.91 | *Sorbitan* | 1.09 |
| *Butyric acid* | 1.01 | *Dipropylene glycol* | 1.03 |
| *Tetrafluoroethylene* | 0.98 | *Diethylene glycol* | 1.04 |
| *Chlorotrifluoroethylene* | 1.05 | *Vinyl pyrrolidone* | 1.23 |
| *Hexamethylene* | 1.02 | *Vinyl versatate* | 1.11 |

Preferably, the expanders are selected from the group formed by DMSO, alcohols, acetates, or water and a mixture thereof, and metal salts of silver, copper, iron, nickel or cobalt, which activate the fines by an initial increase in the basal spacing of the layers and modify the surface characteristics of the clay. The penetration of the precursors will be accelerated, without being limiting in character, by the use of temperature, a turbulent regime homogenizer, ultrasounds, supercritical fluids, deflocculating agents such as acrylates and/or phosphates, pressure or a combination thereof. The drying of these with controlled size, after washing or not with water or alcohols, can be performed as described above. According to another preferred embodiment of the present invention, the dissolution of the intercalation precursor can be used, without a prior washing and/or drying process, as starting means for the following step of incorporating the modifier.
3.2) Additionally or optionally, it is possible to intercalate in aqueous base or with polar solvents, inorganic, organic or hybrid substances in the layered structure. In this same sense, the compounds to be intercalated are selected, and without being limiting in character, from the group formed by PVOH, EVOH and derivatives of the same family, and/or biopolymers such as natural or synthetic proteins and peptides obtained chemically or by genetic modification of microorganisms or plants and natural or synthetic polysaccharides obtained chemically or by genetic modification of microorganisms or plants, and biodegradable polyesters such as polyacetic acid, polylactic-glycolic, polycaprolactone, adipic acid and derivatives and polyhydroxyalkanoates, preferably polyhydroxybutyrate and its copolymers with valerates, biomedical materials such as hydroxyapatites and organic salt phosphates, and/or natural or synthetic antioxidants (preferably polyphenols, such as, but not being limited to, resveratrol or flavonoids, plant extracts such as, but not being limited to, eugenol or rosemary extracts and vitamins, preferably tocopherols and tocotrienols or ascorbic acid/vitamin C). Quaternary ammonium salts can also be intercalated, preferably salts permitted for food contact applications (included in the lists of monomers and other starting substances authorized by legislation for use in the manufacturing of materials and plastic objects) such as, and without being limiting in character, hexadecyltrimethylammonium bromide, polyethylene glycol esters with monocarboxylic aliphatic acids (C6-C22) and its ammonium and sodium salts, perfluorooctanoic acid and its ammonium salt, chloride copolymers of N-methacryloyloxyethyl -N,N-dimethyl-N-carboxymethylammonium, bis(2-hydroxyethyl)-2-hydroxypropyl-3-(dodecyloxy) methylamonnium chloride; and chitosan and its derivatives, silver, iron, copper, nickel and/or its organic or inorganic salts, and other particles or nanoparticles with antimicrobial, antioxidant or oxygen sequestrating properties and/or combinations thereof.
When the inorganic material which is intercalated is based on metals such as silver or organic and/or inorganic salts of silver, copper, iron cobalt, nickel or other metals with antimicrobial and/or oxygen sequestrating power, a physical or chemical treatment can be subsequently applied to change the oxidation status of the intercalation metal centre, either totally or partially. These treatments include, without being limiting in character: Refiring at high temperatures (250-1200°C), UV radiation, infrared radiation, microwave radiation, chemical reduction by ethanol and/or NaBH₄ and/or chemical reducing agents. On concluding any of these treatments, the degree of oxidation of the metal centre will have been modified, either totally or partially, (silver, copper, iron, nickel, zinc, cobalt, or another metal used), conferring the material antimicrobial and/or oxygen sequestrating powers that are more or less intense.
When the organic matter which is intercalated with the EVOH or any material of the family thereof with molar ethylene content preferably less than 48%, and more preferably less than 29%, they are taken to saturation in aqueous medium or in specific solvents of alcoholic type and mixtures of alcohols and water, more preferably of water and isopropanol in proportions by volume of water greater than 50%.
On the other hand, the biopolymers with or without plasticisers, with or without crosslinkers and with or without emulsifiers or surfactants or another type of nanoadditives, are of the group formed by synthetic and natural polysaccharides (plant or animal), such as cellulose and derivatives, carrageenans and derivatives, alginates, dextran, gum arabic and preferably chitosan and any of its derivatives both natural and synthetic, more preferably chitosan salts and even more preferably chitosan acetate, and proteins both derived from plants and animals, such as corn proteins (zein), gluten derivatives, such as gluten or its gliadin and glutenine fractions and more preferably gelatine, casein and soy proteins and derivatives thereof, as well as natural or synthetic polypeptides of the elastin type obtained by chemical process or genetic modification of microorganisms or plants, lipids such as, carnauba wax, candelilla wax, *shellac* and fatty acids and monoglycerides and/or combinations of all the above.
In the case of chitosan, the degree of deacetylation will preferably be greater than 80% and more preferably greater than 87%. The penetration of the precursors will be accelerated by the use of temperature, a turbulent regime homogenizer, ultrasound, pressure or a combination thereof.
In a later step, or alternative to the modification of the fines pre-treated with precursors and which may have been washed and/or dried or maintained in liquid medium, low molecular weight substances will be added with active or bioactive character in order that they are either intercalated or released in controlled form giving rise to compounds with active or bioactive capacity. The active substances shall be ethanol, or ethylene, or the essential oil type (preferably thymol, carvacrol, linalol and mixtures), or reduced size antimicrobial peptides (preferably bacteriocins), natural or obtained by genetic modification (preferably nisins, enterocins, lacticins and lisozymes), or natural or synthetic antioxidants (preferably polyphenols, such as, but not limited to, resveratrol or flavonoids, plant extracts such as, but not being limited to, eugenol or rosemary extracts and vitamins, preferably tocopherols and tocotrienols or ascorbic acid/vitamin C) or drugs or enzymes of bioavailable calcium compounds, fish oils, probiotics, symbiotics or prebiotics (undigestible fibre), or organic and inorganic metal salts (preferably silver, copper, iron, nickel or cobalt) or a combination thereof. It is expected that these elements can remain fixed and/or subsequently released from the nanocomposite towards the product in controlled form (control of the matrix) and exercise their active or bioactive role, and/or that they can be released from the matrix and that the nanoclays control the kinetics (control of the nanoadditive). The contents to be added are, in general, less than 80% by volume of the dissolution, preferably less than 12% and more preferably less than 8%. The penetration of the precursors will be accelerated by the use of temperature, a turbulent regime homogenizer, ultrasound, pressure or a combination thereof.
In any of the previous stages in the preparation of the nanoclays involving wet process the use of deflocculating agents can be contemplated to facilitate the processing, such as, and without being limiting in character, polyphosphates and/or acrylates.
Finally, a product will be obtained in liquid process or dry process. If there is a drying step a powder will be obtained with controlled particle size as described above. Otherwise, it will be added during step 4 directly in liquid process.
4) Incorporation of the product of steps two (dry or wet process) and three (dry process or wet process) in a plastic or ceramic matrix by any plastic processing process (such as dissolution and evaporation of the solvent, *in situ* polymerization and melt mixing) or ceramic processing process (preparation of powders typically used in the manufacturing of ceramic products which involve grinding, drying in general and typically atomization, pressing or extrusion, glazing in the case of glazed products, and firing).

Due to the control in size in the three dimensions of the particles obtained by the process of the present invention that may go to submicrometric or nanometric levels (until below 500 nanometres), its use is advantageous in those applications where controlled particles sizes are required and under 15 microns, preferably, under 3 microns and more preferably under one micron, such as fine or nanometric coatings and nanorigidifiers of plastics and other materials.

In another aspect, the present invention relates to a product that can be produced by the aforementioned process.

In another aspect, the present invention relates to the use of said product as an additive in plastic or ceramic matrices with the aim of obtaining nanocomposite materials.

The phyllosilicate particles obtained by the process of the present invention have the aim of improving the physical properties of the matrix materials which contain them. These materials thus acquire properties such as greater thermal or mechanical resistance, gas and vapour barrier capacity, nucleating capacity in foams, electromagnetic radiation blocking capacity, capacity for intercalation and controlled release of active substances (antimicrobial, antioxidant and oxygen absorbers) and bioactive substances (release of probiotics, prebiotics, antioxidants, nutraceuticals and drugs) with minimum impact on the optical properties and flexibility or resistance to impact, and with fire resistance. This is due to the fact that these natural and/or synthetic nanoclays may or may not be intercalated with organic type materials or with organic/inorganic hybrids or with active or bioactive substances as mentioned in step 4.

The phyllosilicates obtained by the process of the present invention are designed for their use in the improvement of properties of materials, preferably plastics, bioplastics and ceramic materials, in multi-sector applications such as fine coatings and to reinforce materials in packaging, automotive, textile, biomedical and pharmaceutical applications, in cosmetics, construction, sun creams, UV-Vis protection applications, controlled release and in foaming applications as nucleating agents.

Throughout the description and the claims, the word "comprises" and their variants do not aim to exclude other technical characteristics, additives, components or steps. For persons skilled in the art, other objects, advantages, and characteristics of the invention shall be partly gathered from the description and partly from practice of the invention. The following examples and drawings are provided by way of illustration and do not aim to be limitative of the present invention.

### DESCRIPTION OF THE FIGURES

Fig. **1** shows a granulometric analysis of a kaolinite clay before the nanoparticulation process obtained by a laser particle analyser (commercial model Malver Mastersizer 2000). The graph shows us the distribution of the particle size.
Fig. **2** shows a granulometric analysis of a montmorillonite clay before the nanoparticulation process obtained by a laser particle analyser (commercial model Malver Mastersizer 2000). The graph shows us the distribution of the particle size.
Fig. **3** shows a granulometric analysis of a vermiculite type clay before the nanoparticulation process obtained by a laser particle analyser (commercial model Malver Mastersizer 2000). The graph shows us the distribution of the particle size.
Fig. **4** shows a granulometric analysis of a kaolinite clay after the nanoparticulation process obtained by a laser particle analyser (commercial model Malver Mastersizer 2000). The graph shows us the distribution of the particle size.
Fig. **5** shows a granulometric analysis of a montmorillonite clay after the nanoparticulation process obtained by a laser particle analyser (commercial model Malver Mastersizer 2000). The graph shows us the distribution of the particle size.
Fig. **6** shows a granulometric analysis of a vermiculite type clay after the nanoparticulation process obtained by a laser particle analyser (commercial model Malver Mastersizer 2000). The graph shows us the distribution of the particle size.

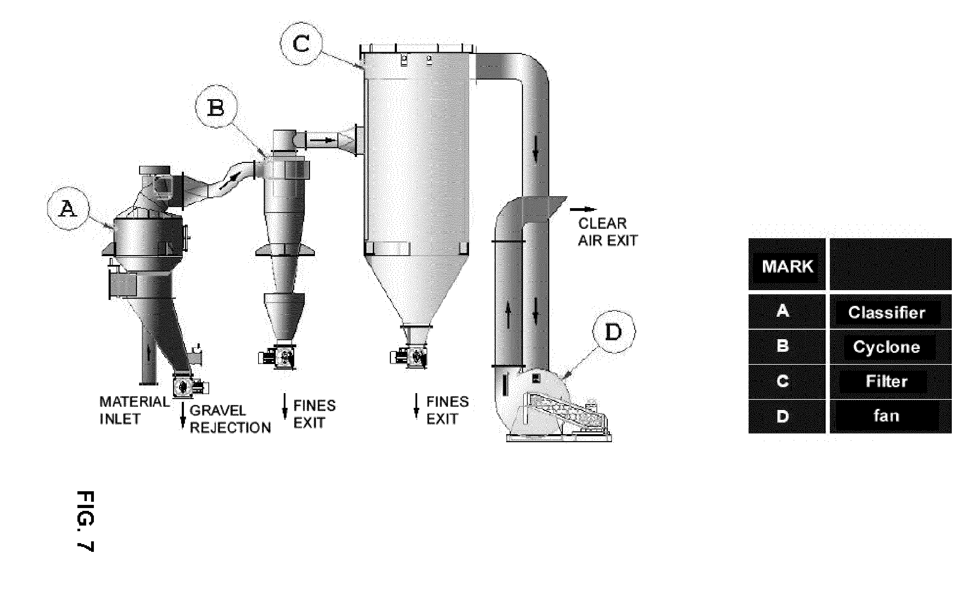

Fig. **7** shows the synopsis of a dry process classifier.
Fig. **8** shows the synopsis of a wet process classifier.
Fig. **9** shows the granulometric analysis obtained by the dryer, where it is observed that the particle size is retained.
Fig. **10** shows the result in optical properties of the incorporation of kaolinite with two particles sizes, one high and another low, in a copolymer type plastic of ethylene and vinyl alcohol containing 32% molar ethylene (EVOH) via plastic extrusion and its subsequent production of layers by compression from the melting.

### EXAMPLES

Below, the invention is illustrated by means of tests carried out by the inventors which reveal the specificity and efficacy of the process of the present invention.

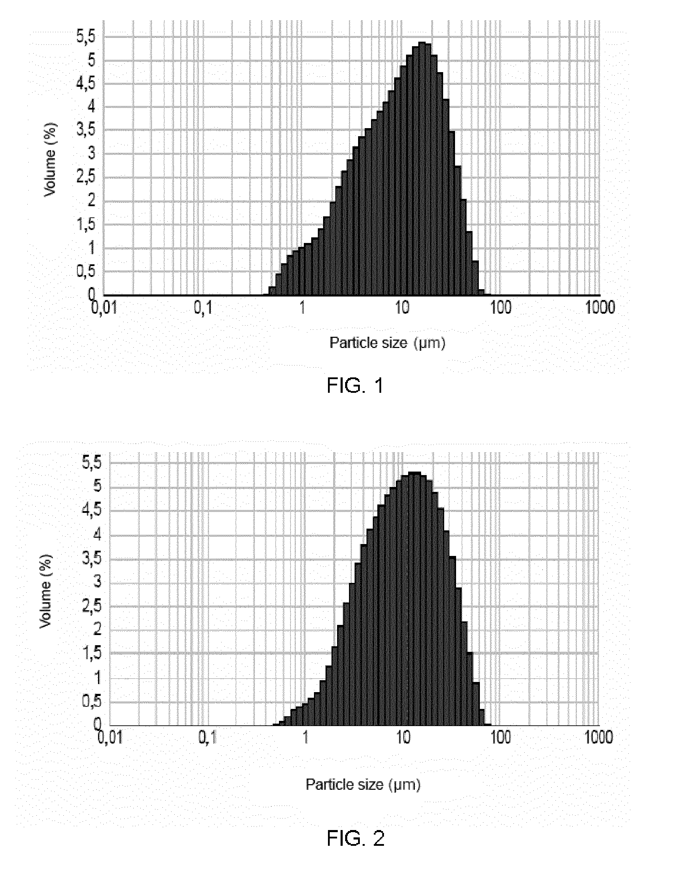

Example 1: We start from a kaolinite type clay from the quarry, we deposit it in a hopper and using an Archimedean screw, we subject it to the mechanical action of hammers that grind it to reduce its size. From here, and using a dynamic classification system, i.e. use of cyclone and classifier, we obtain a distribution of sizes as reflected in figure 1. These particles may already be used for multi-sector applications.

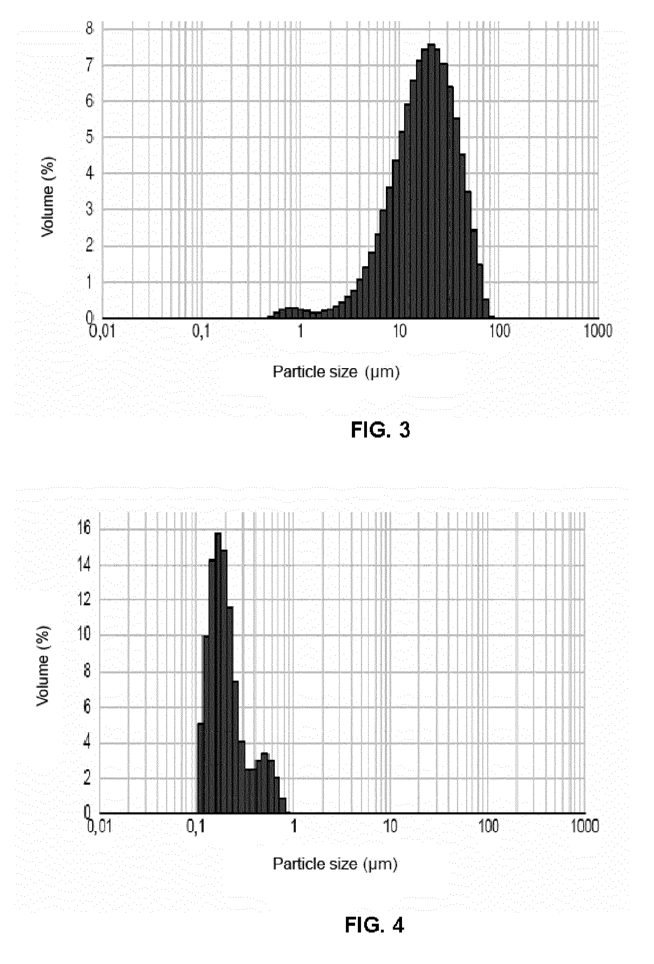

We prepare a suspension one to three parts of kaolinite type clay from the cyclone and water respectively, we introduce them in a wash mill to obtain a good dispersion of the clay in the water and after half an hour we pump the to a tank. We introduce the barbotine (suspension of clay and water) in the equipment using a screw pump equipped with a frequency variator to control the flow to be supplied. We mount 0.8 mm diameter nozzles on the centrifuge obtaining a flow for the solid phase of 1500 l/h, on introducing more flow than that the centrifuge can clarify, for the liquid phase we obtain a suspension of water with kaolinite clay nanoparticles the size of one micron in the largest of their dimensions (figure 4).

This suspension has a very high water content, we again use the centrifuge to concentrate the product but we now introduce a lower flow pump, so that the centrifuge clarifies well and we obtain water for the liquid phase, while for the solid phase we obtain concentrated clay nanoparticles.

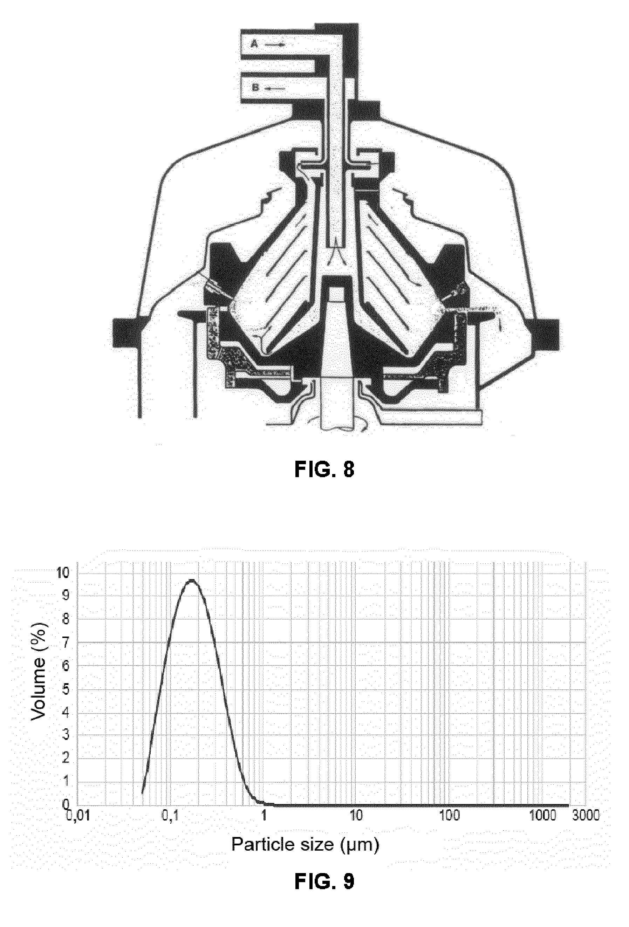

Alternatively, it is possible to use the concentrated clay nanoparticles or dry the nanoparticulate product from the previous step, using the drying process. The concentrated clay nanoparticles are pumped to the drying chamber which is at around 400°C entry temperature, depression 60 mmH2O, output temperature 120°C and feed pump pressure around 18 bars obtaining dry nanoclay particles with a humidity content below 0.5% and a granulometry equal to or a little less than the entry one (see Figure 9).

We incorporate this dry product or the concentrated suspension from the previous step to a plastic or ceramic matrix using any plastic processing process (such as dissolution and evaporation of the solvent, in situ polymerization and melt mixing) or ceramic processing process (preparation of powders typically used in the manufacturing of ceramic products which involve grinding, drying in general and typically atomization, pressing or extrusion, glazing in the case of glazed products, and firing).

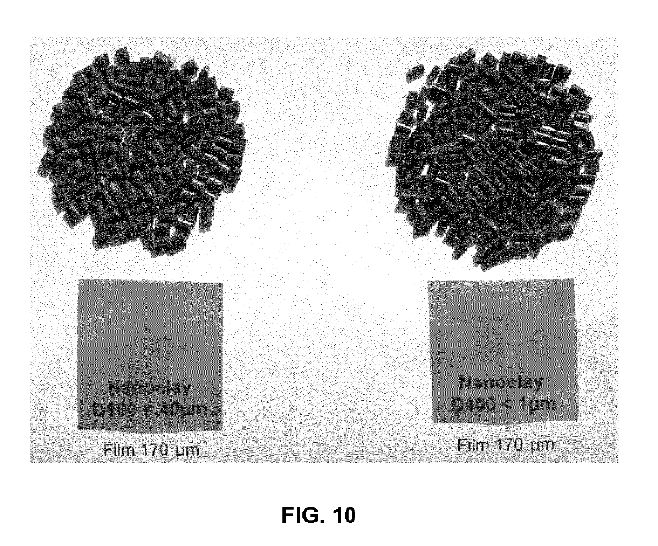

As specific example, figure 10 shows that, after incorporation of two clays (different particles size) in liquid process additivation to an extrusion process with EVOH32 (ethylene and vinyl alcohol copolymer containing 32% molar ethylene) followed by a grinding process (obtaining the granulate in the photo) and its later moulding by compression from the cast in a hot plate press to obtain films (films by compression of 172 microns), the optical properties, i.e. transparency, of the product with less particle size is increased.

Example 2: We start from a montmorillonite type clay from the quarry, we deposit it in a hopper and using an Archimedean screw, we subject it to the mechanical action of hammers that grind it to reduce its size. From here, and using a dynamic classification system, i.e. use of cyclone and classifier, we obtain a distribution of sizes as reflected in figure 2. These particles may already be used for multi-sectorial applications

We prepare a suspension one to three parts of montmorillonite type clay from the cyclone and water respectively, we introduce them in a wash mill to obtain a good dispersion of the clay in the water and after half an hour we pump the to a tank.

We introduce the barbotine (suspension of clay and water) in the equipment using a screw pump equipped with a frequency variator to control the flow to be supplied. We mount 0.8 mm diameter nozzles on the centrifuge obtaining a flow for the solid phase of 1500 l/h, on introducing more flow than that the centrifuge can clarify, for the liquid phase we obtain a suspension of water with montmorillonite clay nanoparticles the size of one micron in the largest of their dimensions (figure 4).

This suspension has a very high water content, we again use the centrifuge to concentrate the product but we now introduce a lower flow pump, so that the centrifuge clarifies well and we obtain water for the liquid phase, while for the solid phase we obtain concentrated clay nanoparticles.

Alternatively, it is possible to use the concentrated clay nanoparticles or dry the nanoparticulate product from the previous step, using the drying process. The concentrated clay nanoparticles are pumped to the drying chamber which is at around 400°C entry temperature, depression 60 mmH2O, output temperature 120°C and feed pump pressure around 18 bars obtaining dry nanoclay particles with a humidity content below 0.5% and a granulometry equal to or a little less than the entry one.

We incorporate this dry product or the concentrated suspension from the previous step to a plastic or ceramic matrix using any plastic processing process (such as dissolution and evaporation of the solvent, in situ polymerization and melt mixing) or ceramic processing process (preparation of powders typically used in the manufacturing of ceramic products which involve grinding, drying in general and typically atomization, pressing or extrusion, glazing in the case of glazed products, and firing).

Example 3: We start from a dehydrated vermiculite type clay. The vermiculite, as it is dehydrated, barely has water in the interlayer spaces. We deposit it in a reactor that is tempered at 60° C and full of water. After 20 hours agitation, with ultraturrax and at that temperature we obtain the hydrated vermiculite (figure 3). We screen and remove the iron from the barbotine using a 45 micron mesh opening screen eliminating the particles greater than that dimension and possible ferric aggregates the vermiculite may have.

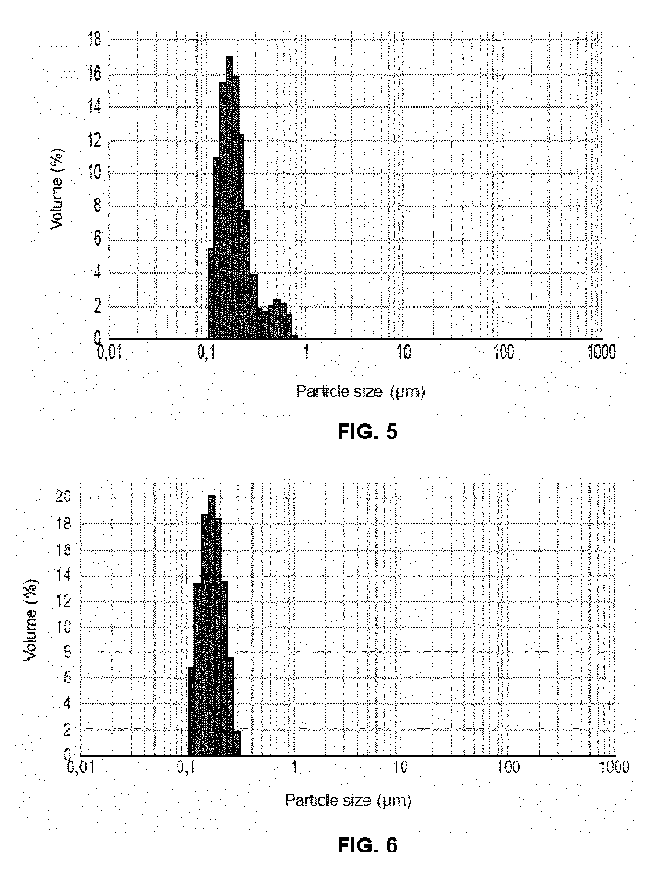

We introduce the barbotine (suspension of clay and water) in the equipment using a screw pump equipped with a frequency variator to control the flow to be supplied. We mount 0.5 mm diameter nozzles on the centrifuge obtaining a flow for the solid phase of 550 l/h, on introducing more flow than that the centrifuge can clarify, for the liquid phase we obtain a suspension of water with vermiculite clay nanoparticles the size of one micron in the largest of their dimensions (figure 6)

This suspension has a very high water content, we again use the centrifuge to concentrate the product but we now introduce a lower flow pump, so that the centrifuge clarifies well and we obtain water for the liquid phase, while for the solid phase we obtain concentrated clay nanoparticles.

Alternatively, it is possible to use the concentrated clay nanoparticles or dry the nanoparticulate product from the previous step, using the drying process. The concentrated clay nanoparticles are pumped to the drying chamber which is at around 400°C entry temperature, depression 60 mmH2O, output temperature 120°C and feed pump pressure around 18 bars obtaining dry nanoclay particles with a humidity content below 0.5% and a granulometry equal to or a little less than the entry one.

We incorporate this dry product or the concentrated suspension from the previous step to a plastic or ceramic matrix using any plastic processing process (such as dissolution and evaporation of the solvent, in situ polymerization and melt mixing) or ceramic processing process (preparation of powders typically used in the manufacturing of ceramic products which involve grinding, drying in general and typically atomization, pressing or extrusion, glazing in the case of glazed products, and firing).

Example 4: We start from a montmorillonite type clay from the quarry, we deposit it in a hopper and using an Arquimedes screw, we subject it to the mechanical action of hammers that grind it to reduce its size. Via the classification process described in example 2 we classify a controlled particle size until obtaining a D100 of 1 micron, we later perform the modification with hexadecyltrimethylammonium bromide. The present example describes the modification of a montmorillonite with 20% ammonium salt. We deposit it in a reactor that is tempered at 60° C, which has a stirrer in the form of amphora and a homogenizer, its capacity is 4000 litres. In the first step we introduce 320 kg of montmorillonite clay. We place the solution under stirring and for 90 minutes we apply homogenization to it. In a tank with stirrer we introduce 2000 litres of osmotized water at a temperature of 60°C, we add the ammonium salt and we place it under stirring until the solution is totally transparent, i.e. this salt is totally dissolved in the water. Next, we add the ammonium salt solution and water in the reactor. We mix everything under stirring and at a temperature of 60°C for 24 hours. After this period of time, we unload the reactor with the modified clay. We pass the entire solution through an iron removal unit to eliminate possible ferromagnetic impurities. We subject the clay to a series of washes to eliminate the excess salt.

The clay particles modified with the ammonium salt are pumped to the drying chamber, which is at an entry temperature of around 190°C and an exit temperature of 108°C, obtaining nanoclay particles dried with a humidity content under 0.5% and a granulometry equal to or slightly less than the entry one.

We incorporate this dried product to a plastic or ceramic matrix using any plastic processing process (such as dissolution and evaporation of the solvent, in situ polymerization and melt mixing) or ceramic processing process (preparation of powders typically used in the manufacturing of ceramic products which involve grinding, drying in general and typically atomization, pressing or extrusion, glazing in the case of glazed products, and firing).

## Claims

1. Process to obtain phyllosilicate particles with controlled particle size comprising at least the following stages:
a) Decrease in particle size of the starting phyllosilicate particle to a size between 5 and 100 microns in D90 and
b) Controlled extraction of the particles which have a size between 0.05 to 15 microns in D100.

2. Process according to claim 1, where the starting phyllosilicate of stage (a) is a layered phyllosilicate selected from kaolinite, montmorillonite, pyrophyllite, bentonite, smectite, hectorite, sepiolite, saponite, laponite, halloysite, vermiculite, mica, chlorite, illite or mixtures thereof.

3. Process according to any of claims 1 or 2, which further includes a phyllosilicate surface modification stage with surface modifiers and/or active or bioactive substances comprising the pre-treatment of said phyllosilicate with expander-type precursors.

4. Process according to claim 3, where the expander-type precursors are selected from DMSO, alcohols, acetates, water and mixture thereof, or metal salts of silver, copper, iron, nickel or cobalt.

5. Process according to any of claims 3 or 4, which further comprises a stage of intercalation in aqueous base or with polar solvents of inorganic, organic or hybrid substances.

6. Process according to any of claims 1 to 5, where the decrease in particle size of the phyllosilicate of stage (a) is performed to a size between 5 and 30 microns in D90.

7. Process according to any of claims 1 to 6, where the decrease in particle size of stage (a) is performed by dry process.

8. Process according to claim 7, where the decrease in particle size is performed by means of grinding.

9. Process according to any of claims 1 to 6, where the decrease in particle size of stage (a) is performed by wet process.

10. Process according to claim 9 where the decrease in particle size is performed by means of the use of wash mills.

11. Process according to any of claims 1 to 10, where the extraction in stage (b) is performed by dry process.

12. Process according to claim 11, where the extraction by dry process is performed by means of the use of dynamic classifiers.

13. Process according to any of claims 1 to 12, where the extraction in stage (b) is performed by wet process.

14. Process according to claim 13, where the extraction by wet process is performed by means of the use of centrifuges.

15. Process according to any of claims 13 or 14, wherein a drying stage is also performed.

16. Product that can be obtained by the process according to any of claims 1 to 15.

17. Use of the product according to claim 16, as additive to incorporate in plastic or ceramic matrices.
